# EUROPEAN PATENT APPLICATION

(11) **EP 4 789 984 A2**
(43) Date of publication of application: **12.08.2026**
(21) Application number: 26170392.0
(22) Date of filing: 27.08.2021
(51) Int. Cl.: B65D 85/804

(54) **COMPOSTABLE TOP LID STRUCTURE FOR A BEVERAGE PREPARATION CAPSULE AND USE OF CAPSULE COMPRISING SAID COMPOSTABLE TOP LID STRUCTURE**

(30) Priority: 11.09.2020 EP 20195814
(62) Document number(s) of the earlier application(s) in accordance with Art. 76 EPC: 23162222.6 / 4 223 664; 21769419.9 / 4 072 974
(71) Applicant: Société des Produits Nestlé S.A., 1800 Vevey (CH)
(72) Inventor: NORDQVIST, David, 1112 Echichens (CH); PAVAN, Chiara, 1115 Vullierens (CH)
(74) Representative: Rosolen-Delarue, Katell

(57) **Abstract**

1.A capsule (100) for preparing a beverage in a beverage production machine, wherein the capsule (100) comprises:
- a capsule body (200) with a sidewall (210) delimiting a chamber (250) for containing a substance (500) for the preparation of the beverage, and a rim portion (211);
- an injection wall (220) for injecting a fluid in the chamber (250) for preparing the beverage upon interaction of the fluid with the substance (500); and
- a delivery wall (300) being connected to the capsule body (200) to close the chamber (250),

wherein the delivery wall (300) comprises in a layered manner:
∘ a retention layer (320) being adapted to be opened upon interaction with opening elements under the effect of rising pressure of the fluid being injected into the capsule (100),
∘ a filter layer (310) for filtering out particles from the prepared beverage dispensed via the delivery wall (300), the filter layer (310) is provided opposite to the chamber (250) with respect to the retention layer (320),
∘ a moisture and/or oxygen barrier layer having a barrier function against liquid and/or gaseous substances entering and/or leaving the chamber (250), and
∘ a first adhesive layer covering, at least partially, the delivery wall (300), preferably the retention layer (320) on the side of the delivery wall (300), preferably the retention layer (320) that is oriented towards the chamber (250) for joining the delivery wall (300) to the capsule body (200), preferably to the rim portion (211); and

wherein each of the filter layer (310), the retention layer (320), the barrier layer and the first adhesive layer is made of biodegradable material.

The invention also relates to the use of said capsule.

## Description

### 1. Field of the invention

The present invention relates to a capsule for preparing a beverage in a beverage production machine, a method for producing the capsule and a use of the capsule for preparing a beverage in a beverage production machine.

### 2. Technical background

Single-serve beverage capsules for beverage preparation machines are known in the art. These capsules are commonly used for on demand dispensing of beverages, like coffee, tea or hot chocolate, and enjoy popularity due to their fresh tasting, variability of flavours and the convenience of the beverage preparation.

Usually, the capsule containing a beverage component is inserted in a capsule holder of a beverage preparation machine, the capsule holder is closed and the beverage preparation is started. Fluid, such as water or milk, is delivered to the capsule to interact with the beverage component contained inside the capsule to produce the desired beverage. When a sufficient amount of the fluid fills the capsule, the capsule opens under pressure of the fluid to release the prepared beverage. For example, opening of the capsule can be accomplished by pressing an extraction face of the capsule with a force effected by increasing pressure of the fluid inside the capsule against an opening structure provided in the capsule holder such that the extraction face is torn upon reaching a breaking stress thereof. The opening structure can be a number of relief and recessed elements, e.g. pyramid-like elements, onto which the extraction face extends and tears under the effect of the internal pressure of the fluid. Such pressure controlled beverage preparation has the advantage that it can produce a beverage of high quality.

However, a high number of parameters and dynamic effects can influence the opening process of the capsule on the extraction face with the aforementioned opening structure and thus, repeatability and consistency in the opening process are difficult to achieve, which may have a negative impact on the result of the finished beverage.

In particular, it has been found that the extraction face needs to show a certain amount of stiffness to ensure pressure built-up in the capsule while avoiding collapse thereof during the opening process. Conversely, the extraction face should be configured such that it can be torn by the opening structure in the opening process. Also, it is desirable that particles and fibres from the beverage component are retained inside the capsule to avoid not only contamination of the prepared beverage but also obstruction of openings in the capsule and/or the opening structure that are provided for dispensing the prepared beverage out of the beverage preparation machine.

In the prior art, these technical challenges are addressed, by forming the extraction face of a membrane made of aluminium with a very precisely controlled thickness, in particular, of about 30 to 40 micrometres. Aluminium offers a number of advantages, such as a high pressure resistance, durability, flexibility, low weight, provision of long shelf-life and letting the taste of the prepared beverage unaltered. Unfortunately, aluminium capsules are difficult to recycle because in many countries systems for recycling aluminium are either not in place, not sufficiently advanced or require the provision of additional waste disposal systems, such as consumer collection stations, which are difficult to establish in practice. In addition, the production of virgin aluminium for the capsules requires a high amount of energy leading to an increase in carbon emissions if capsules are not successfully recycled.

Therefore, recently various attempts were made to replace the materials used for the capsules with alternative materials. For example, bioplastics made from cornstarch or dried pulp made from sugarcane fibre were proposed to be used as capsule materials. However, a disadvantage of such materials is that they do not have the same material properties as presently used materials, like aluminium. For example, capsules made from alternative materials often have a limited shelf-life as they do not provide the same reliable oxygen and moisture barrier as aluminium.

In particular, the design of an extraction face with alternative materials appears to be challenging, as it is not possible to transfer simply the design principles and solutions applied for the former aluminium extraction face to these new materials. Approaches that, for example, simply replace the known aluminium formed extraction face with a paper-based material have proved unsuccessful, because the quality of the prepared beverages, reproducibility of flavours and beverage consistency were not comparable with the high standards set by the known aluminium based extraction faces.

Therefore, it is an object of the present invention to provide a capsule with a configuration and design that facilitates the use of compostable materials for the entire capsule while maintaining and/or exceeding the quality and continuity standards of the prepared beverage as set by a comparable aluminium capsule.

These and other objects, which become apparent upon reading the description, are solved by the subject-matter of the independent claims. The dependent claims refer to preferred embodiments of the invention.

### 3. Summary of the invention

A first aspect of the invention relates to a capsule for preparing a beverage in a beverage production machine. The capsule comprises a capsule body with a sidewall delimiting a chamber for containing a substance for the preparation of the beverage and an injection wall for injecting a fluid in the chamber for preparing the beverage upon interaction of the fluid with the substance. The capsule further comprises a delivery wall that is connected to the capsule body to close the chamber. The delivery wall comprises in a layered manner a retention layer that is adapted to be opened upon interaction with opening elements under the effect of rising pressure of the fluid being injected into the capsule, and a filter layer for filtering out particles from the prepared beverage dispensed via the delivery wall. Each of the filter layer and the retention layer is made of biodegradable material. Therein, the filter layer is provided opposite to the chamber with respect to the retention layer.

Therein, the expression "biodegradable material" may be understood as any material that can be broken down into environmentally innocuous products by (the action of) living things (such as microorganisms, e.g. bacteria, fungi or algae). This process could take place in an environment with the presence of oxygen (aerobic) and/or otherwise without presence of oxygen (anaerobic). This may be understood, for example, as meaning that composting can be carried out without reservation. In particular, at the end of a composting process there are no residues of the material, which may be problematic for the environment, or any non-biodegradable components.

Examples for biodegradable materials may be different plant-based materials, such as wood, bamboo, bamboo fibres, cellulose, cellulose pulp, wood pulp, sugarcane pulp, paper and/or cardboard. In addition, bioplastic families such as polyhydroxybutyrate (PHB) and co-polymers, polybutylene succinate (PBS), poly(butylene succinate-co-butylene adipate) (PBS-A/PBSa), polylactide (PLA), polybutylene adipate terephthalate (PBAT), Cellulose Acetate, starch and/or compounds of above mentioned materials are other examples.

International standards, e.g. EU 13432 or US ASTM D6400, specify technical requirements and procedures for determining compostability of a material. Biodegradation can be tested following standards such as ISO 14855, ISO 17556 or ISO 14851. For example, one of the tests requires that - in order to be considered as being "industrially compostable" - at least 90% of the material in question is biologically degraded under controlled conditions in 6 months. Similar test exist also to enable home composting certification.

In other words: a capsule for preparing a beverage in a beverage production machine is provided. For instance, the capsule may be understood as a receptacle for containing a substance for preparing a beverage and preferably may form a case or container that surrounds the substance. The capsule body delimits with its sidewall (at least part of) a chamber, which may be a compartment, a cavity or a hollow space in the capsule, for example. The capsule further comprises an injection wall suitable for injecting a fluid in the chamber. Injection of the fluid may lead to an interaction of the fluid with the substance, which may include any kind of chemical and/or physical reaction between the substance and the fluid, such as wetting, infusion, extraction, dissolution, and/or any other kind of corresponding interaction to produce a beverage product. The capsule further comprises a delivery wall that is connected to the capsule body to close the chamber. For example, it may be conceivable that a space inside the capsule may be (completely) surrounded from all sides by the container body (sidewall), the injection wall and the delivery wall, preferably such that the chamber for receiving the substance is formed (and closed). Thereby, a capsule can be provided that can be filled with a substance for preparing a beverage and used with known capsule machines. The substance can be protected from degradation and outside influences, like oxidation or moisture, and flavours of the substance can be kept inside the capsule even when storing the same for extended periods.

The delivery wall of the invention comprises in a layered manner a retention layer and a filter layer. Thus, the delivery wall may comprise different parts that are arranged in plies, slats, tiers or as strata. Thereby, it is possible to provide the delivery wall with an arbitrary number of layers that each can provide a desired functionality, such as, for example, a layer for sealing, (a further layer) for forming a (moisture/oxygen) barrier, and/or for purifying and/or sieving out certain particles or contents from the prepared beverage before the prepared beverage leaves the capsule (the chamber), such as with the filter layer. Therein, the delivery wall may have various (layer) configurations, forms and shapes. In addition, the retention layer is provided such that it can be opened by opening elements (e.g. of the beverage production machine) under the effect of rising pressure of the fluid being injected into the capsule, for example by relative movement between the respective elements. Therein, the opening elements may have various configurations, forms and shapes and may comprise a plurality of relief and recessed elements, e.g. pyramid-like elements. This design allows tailoring the design of the delivery wall to technical needs.

Each of the filter layer and the retention layer is made of a biodegradable material. This may lead to a more straightforward recovery of the organic material inside the capsule as well as of the capsule material itself.

The filter layer is provided opposite to the chamber with respect to the retention layer. Therein, it has surprisingly been found that the particular order and orientation of the retention layer and the filter layer with respect to the capsule body as defined in the present invention leads to a number of improvements. For example, it is observed that the pressure profile during the beverage preparation is more consistent and reproducible. Moreover, a better crema formation and extraction and a reduced concentration of particles and residues of the substance, e.g. roast and ground of coffee, is found with this configuration in the beverage.

In the art, this is unexpected since with the inventive configuration, in operation, the filter layer may be in direct contact with the opening elements, which commonly are used for generating local pressure points for breaking material under pressure, thus leading to an increased risk of causing the filter layer to lose its filter capabilities due to the puncturing of the material. For this reason, in the prior art, a filter, if provided at all, would be always inside a capsule. Similarly, it is surprising that the retention layer is opened by the opening elements in a more effective manner. With the inventive configuration, openings in the delivery wall are distributed more numerous, evenly and centrally than with configurations of known capsules. A better and uniform extraction result can be achieved as the injected fluid is distributed evenly inside and out of the capsule. This effect goes against technical intuition of a better puncture result being achieved by placing a puncturing tool in direct contact with the intended object.

The above effects may result, for example, from a dampening effect of the filter layer on the deformation of the retention layer during the pressure build-up inside the capsule. The thrust generated inside the chamber by the increasing pressure of the fluid injected in the chamber may have to work against tensile forces of both layers, i.e. the filter layer as well as the retention layer. Thereby, the deformation of the delivery wall towards opening elements may be delayed towards a higher pressure inside the chamber, which can be reached quicker, and the opening elements will interact with the delivery wall at a higher pressure level than with a different capsule configuration. Due to the increased pressure build-up, the delivery wall is pierced more effectively.

From the above, it can be concluded that the present invention facilitates to provide a capsule with an interface to the outside of the capsule that is made entirely of biodegradable material and still provides a sufficient or even improved pressure resistance, which may be required for building up enough pressure for the beverage preparation. In addition, the inventive design facilitates a filtering capability and extraction of the capsule, which are required to prepare a beverage of high quality - a quality found so far in the prior art in beverages from aluminium based capsules.

Preferably, the retention layer may face the chamber. Alternatively or additionally, the retention layer may be provided closer to the chamber than the filter layer. Therein, for example, the expression "facing" may be understood as being directed towards the respective reference object without necessarily having to be provided directly onto the respective reference object.

According to a preferred embodiment, each of the filter layer and the retention layer may be made of a different biodegradable and preferably (home) compostable material.

Thereby, it becomes possible to dispose the capsule after its use in compost piles, which are designated sites with specific conditions dependent on wind, sunlight, drainage and other factors, whereby the earth can be supplied with nutrients once the material has completely broken down. The composting can be accomplished with industrial composting sites and/or with home composters. For example, according to the aforementioned internationally accepted legal standards, compostable plastic materials must have the following characteristics simultaneously for a material to be defined as compostable. The material must be biodegradable and disintegrable, i.e. fragmentation and invisibility in the final compost, and it must not have negative effects on the composting process and quality. Thereby, the ecological impact of using single-serve capsules can potentially be reduced further.

The different materials may preferably distinguish in at least one of their respective physical properties, such as tensile strength, ductility, elasticity, puncture resistance, density, porosity, and/or, if applicable, fibre structure and/or fibre orientation.

By providing at least the two aforementioned layers from different materials, it is possible to provide the delivery wall as a composite structure. However, it is also conceivable that the delivery wall may comprise multiple different layers, which preferably may be made from different materials. This may lead to the advantageous effect that the combination of the two or more constituent materials with different physical or chemical properties produce a structure with characteristics different from each of the individual components. Thereby, the interface of the capsule to the outside can be tailored to the technical needs of the application. For example, by providing each of the layers with a different tensile strength, the pressure built up inside the capsule can be controlled and defined as required. Thereby, for example, the capsule can be designed to produce a beverage according to the specifications of its recipe. Moreover, by providing the two layers from materials with a different fibre configuration it is possible to tailor material characteristics relevant for the interaction of the delivery wall with the prepared beverage to the individual application, such as defining the filtering capabilities of the delivery wall. Also, the difference of orientation of the individual layers of the delivery wall may lead to different stresses in the layers, which can be taken into consideration with the above configuration by selecting different materials. For example, the material of one of the layers may break at a lower pressure than the material of another layer but the structure may be kept together by the combined resistance of each material, which may support each other under the effect of pressure.

According to a further preferred embodiment, the retention layer (preferably the material of the retention layer) may be configured such that it provides a preferably bidirectional barrier against liquid and/or gaseous substances entering and/or leaving the chamber. Therein, it is conceivable that the retention layer may comprise an additional layer or coating that with respect to the retention layer may be (provided thereon) either opposite to the chamber or to the filter layer.

Thereby, it is possible to provide the capsule with a barrier against certain substances leaving or entering the capsule. This allows to increase the shelf-life of the capsule and to keep substances contained inside the capsule fresh. By providing the retention layer with such capabilities, the design and manufacture of the capsule can be simplified and the capsule can be made entirely from alternative materials.

According to a preferred embodiment, the retention layer (preferably the material of the retention layer) may be configured such that it is resilient against a built-up pressure in the chamber between 1 and 20 bar, more preferred between 10 and 20 bar, most preferred between 12 and 18 bar.

Thereby, the preparation of beverages, which require a defined pressure for a successful preparation, can be accomplished. Moreover, it is possible to maintain the capsule closed for a prolonged period during the preparation process because the time until the pressure has reached its predetermined level is dependent on the pressure limit of the material. Thereby, beverage preparation time can be controlled by selecting a material.

According to a preferred embodiment, the filter layer may be made of a compostable material. Alternatively or additionally, the filter layer may be made of a non-woven material. Examples may be wood pulp, sugarcane pulp, cellulose fibres, rayon fibres, polybutylene succinate (PBS), poly(butylene succinate-co-butylene adipate) (PBS-A/PBSa), polyhydroxybutyrate (PHB) and/or Polylactic acid (PLA).

Commonly, non-woven materials may be made from short and long fibres being bonded together by mechanical, chemical, thermal treatment. Non-woven materials are advantageous as they can be engineered for their specific use and they can be recycled after use and provide material functionalities, such as resilience and tear resistance, tensile strength, low weight, filtration, and/or providing sterility and a bacterial barrier. For example, length of the fibres in non-woven materials and their respective bonding may be adapted in accordance with the requirements of the application, thereby improving the application.

Alternatively or additionally, the filter layer may have a grammage between 10 and 150 g/m², preferably between 20 and 100 g/m².

Thereby, the characteristics of the filter layer can be set by defining their area density of material, i.e. as mass per unit of area. For example, the tensile strength of the filter layer can be improved by increasing the grammage of its material and/or by using a (non-woven) material comprising fibres of a defined length and/or with a defined fibre bonding. Moreover, the filtration capacity and/or the porosity of the filter layer can be modified, e.g. reduced to smaller particle diameters, by setting the filter layer's material characteristics accordingly. Thereby, it is possible to tailor the filter layer to the specific requirements of the beverage preparation.

According to a preferred embodiment, the retention layer may be made of a material that is compostable. Alternatively or additionally, the retention layer may be made of a material that has a defined, preferably closed fibre structure. For example, the material of the retention layer may be a fibre structure with at least 50% of weight corresponding to softwood pulp, may be cellulose fibres, paper, biopolyesters, Polyhydroxyalkanoate (PHA), Polyhydroxybutyrate (PHB) and co-polymers, and/or Polybutylenesuccinate (PBS) or poly(butylene succinate-co-butylene adipate) (PBS-A/PBSa). Moreover, the material of the retention layer may be cellulose acetate, starch, polyvinyl alcohol (PVOH), and it may include polymers where at least one of the monomer units is vinyl alcohol. Alternatively or additionally, the material of the retention layer may be compounds or laminates of the aforementioned materials.

By providing the retention layer from a material with a closed fibre structure, such as highly refined, i.e. mechanically and/or chemically treated, paper, it may be possible to provide the retention layer with a material that is less prone to absorb liquid while increasing the stiffness of the material. In particular, materials having a low water uptake and low elongation have a beneficial impact on the characteristics of the capsule. By providing the retention layer from such materials, the advantageous effects of the present invention can be amplified.

Alternatively or additionally, the retention layer may have a grammage between 20 and 150 g/m², preferably between 30 and 100 g/m².

Thereby, the characteristics of the retention layer can be set by defining their area density of material. For example, the tensile strength of the retention layer can be improved by increasing the grammage of its material.

According to a preferred embodiment, at least partially the retention layer and the filter layer may be joined to each other on opposite sides thereof, preferably through adhesive bonding, ultrasonic- or heat-sealing. Preferably, an adhesive layer may be provided between the retention layer and the filter layer that is of a biodegradable and preferably of a compostable material. Vegetable based starch or acrylic adhesive may be used as materials for the adhesive layer, for instance.

By joining the two layers of the delivery wall, it becomes possible that stretching and deformation processes of the respective materials become interrelated. By using adhesive bonding (preferably by using some adhesion agent) or heat-sealing for connecting the two layers to each other, a smooth, evenly effective bond is created between the two layers. Thus, a pressure force exerting on the retention layer is evenly divided onto the filter layer also. Thereby, the advantageous effects of the present invention can be amplified with such configuration.

According to a preferred embodiment, the delivery wall may be connected to a rim portion delimiting an opening in the sidewall of the capsule body. For example, the delivery wall may be connected to the capsule body by adhesive bonding, ultrasonic- or heat-sealing. Alternatively or additionally, an adhesive layer may be provided between the delivery wall (preferably the retention layer) and the capsule body that attaches the capsule body and the delivery wall to each other. Preferably, the adhesive layer may cover the opening and/or the rim portion at least partially (or completely).

Alternatively or additionally, the adhesive layer may (completely) cover the retention layer on a side or surface, which is oriented towards the chamber. For example, vegetable based starch or acrylic adhesive may be used as materials for the adhesive layer. It is also conceivable that the adhesive layer may form, for example, part of the layered structure of the delivery wall.

By joining the delivery wall to the capsule body, the two elements are securely connected to each other and contamination of the capsule content with bacteria can be avoided. The content of the capsule may be protected from outside moisture or oxygen through the sealing bond formed between the delivery wall and the capsule body also.

Preferably, it may be conceivable that, by using the aforementioned joining methods, the adhesive layer between the two layers may form an oxygen/moisture barrier and/or a sealant. Preferably, the adhesive layer may be food safe and/or suitable for being used at usual operating temperatures of beverage preparation, e.g. between 100 and 150 degree Celsius.

According to a further preferred embodiment, the capsule body (preferably at least the sidewall and/or the rim portion) may comprise a protective layer for providing a barrier against moisture and/or oxygen. Alternatively or additionally, the injection wall may comprise a protective layer for providing a barrier against moisture and/or oxygen. Preferably, the protective layer may be configured to provide a sealing interface between the capsule body and the injection wall. The protective layer may be made of a biodegradable and preferably compostable material, such as biopolymers or polyvinyl alcohol (PVOH), and it may include polymers where at least one of the monomer units is vinyl alcohol. Alternatively or additionally, the protective layer may be made of compounds or laminates of the aforementioned materials. Preferably, the protective layer may be made of a different material than the filter layer and/or the retention layer.

Thereby, the content of the capsule can be protected from outside moisture or oxygen and a broad range of different materials can be used for the capsule.

According to a preferred embodiment, the capsule body and/or the injection wall may comprise a layered and/or laminated structure. Preferably, the capsule body and/or the injection wall may be made of preferably laminated moulded pulp fibre.

Thereby, the mechanical characteristics, such as the rigidity and/or stiffness, of the respective elements can be tailored to the individual application. For example, the capsule body may comprise additional (integral) structural elements for stiffening, e.g. fins or ridges.

According to a preferred embodiment, the capsule body and the injection wall may be made up of separate pieces or may be integrally formed, e.g., as a one-piece.

Thereby, it is possible to provide the capsule either as different parts or as a single piece or one-piece. Each of these configurations offers advantages in designing, manufacturing and preparing a beverage with the capsule.

A further aspect of the present invention relates to a process for manufacturing a capsule as described above.

The process comprises a step, wherein the capsule body is formed from a biodegradable (and/or compostable) pulp material, such as cellulose pulp, bamboo pulp, wood pulp, bagasse, non-wood pulp or cellulose based pulp in any form. Preferably, the injection wall may be formed along (together) with the capsule body (simultaneously/in the same step). The injection wall is formed such that at least a part of the chamber for receiving the substance for the preparation of the beverage is formed. The delivery wall is provided and attached to the capsule body, e.g. by heat sealing. Therein, the delivery wall is provided on the capsule body such that the filter layer is provided opposite to the chamber with respect to the retention layer.

Preferably, the retention layer may face the chamber. Alternatively or additionally, the retention layer may be provided closer to the chamber than the filter layer.

According to a preferred embodiment, the capsule body may be formed by wet pulp moulding. Therein, the process of forming the capsule body may comprise the step of placing pulp slurry in a mould, for example by filling the mould with the slurry or by drowning the mould in the slurry. The pulp slurry may be pressed in the mould, and the so formed capsule body may be dried.

Alternatively, the capsule body may be formed by dry pulp moulding. Therein, the process of forming the capsule body may comprise the step of providing a blank of preferably dried cellulose fibres. Then, the blank may be formed with a tool preferably under the application of heat and/or water into the shape of the capsule body.

According to a preferred embodiment, the capsule body may be filled with the substance required for the preparation of the beverage. The injection wall may be formed by (wet or dry) pulp moulding. Preferably, the injection wall may be formed along with the capsule body by pulp moulding. Alternatively or additionally, the injection wall may be formed by attachment of a membrane or film as the injection wall to the capsule body after drying thereof, e.g. with a biodegradable (and/or compostable) adhesive. Preferably, the method may further comprise the step of adding a protective layer, which preferably may be made from a biodegradable and/or compostable material. The protective layer may be added on an inside or outside surface of at least a part of the capsule body (preferably of at least a part of the sidewall) that delimits the chamber. Alternatively or additionally, the protective layer may be added on an inside or outside surface of at least a part of the injection wall that delimits the chamber. It is also conceivable that the protective layer may be added on a surface of at least a part of the rim portion (facing away from the chamber). This may be accomplished, for example, by thermoforming. Preferably, the protective layer is provided as a liner.

Thereby, it is possible to obtain a capsule with all the advantages and benefits described above. Moreover, (wet/dry) pulp moulding offers the advantage to design capsule shapes and components thereof more freely while facilitating the use of different materials, thereby providing at least parts of the capsule as composite structures. Thus, it is possible to improve existing capsule designs structurally as well as to provide them from alternative materials, which may be ecologically beneficial.

A further aspect of the present invention relates to a use of a capsule as described above for preparing a beverage in a beverage production machine having a capsule holder. So, a beverage can be prepared in an advantageous and ecologically beneficial manner.

### 4. Brief description of drawings

Further features, advantages and objects of the invention will become apparent for the skilled person when reading the following detailed description of embodiments of the invention and when taking in conjunction with the figures of the enclosed drawings. In case numerals have been omitted from a figure, for example for reasons of clarity, the corresponding features may still be present in the figure.
- **Figure 1**: shows a schematic exploded view of a capsule according to an embodiment of the invention.
- **Figure 2**: shows a line chart of a pressure profile of the pressure inside the capsule of Figure 1 over time.
- **Figure 3**: shows a comparative chart for two different capsule configurations, with one configuration displaying the pressure profile of the capsule of the invention of Figure 1 (as illustrated in Figure 2), while the other configuration shows the pressure profile of a comparative capsule, which has a delivery wall, where the order of the respective delivery wall layers is reversed to the delivery wall of the capsule of Figure 1.
- **Figure 4**: shows a line chart of pressure profiles for typical paper materials.
- **Figure 5**: shows a line chart of pressure profiles for typical non-woven materials.

### 5. Detailed description

The figures show different views and aspects of an embodiment of a capsule 100 for preparing a beverage in a beverage production machine in accordance with the present invention. The capsule 100 may have a composite structure and/or may be made from a composite material, which preferably may consist entirely from biodegradable and/or compostable materials.

The capsule 100 comprises a capsule body 200 with a sidewall 210. The capsule body 200 may have any shape or form. For example, the capsule body 200 may have a form that is suitable for the capsule 100 being inserted in a capsule holder of a (known) beverage production machine. The capsule body 200 may have a truncated-, cup- or bowl-shaped form. The capsule body 200 may have a circular cross-section. Thereby, for example, pressure related forces exerting on the capsule body 200 can be absorbed.

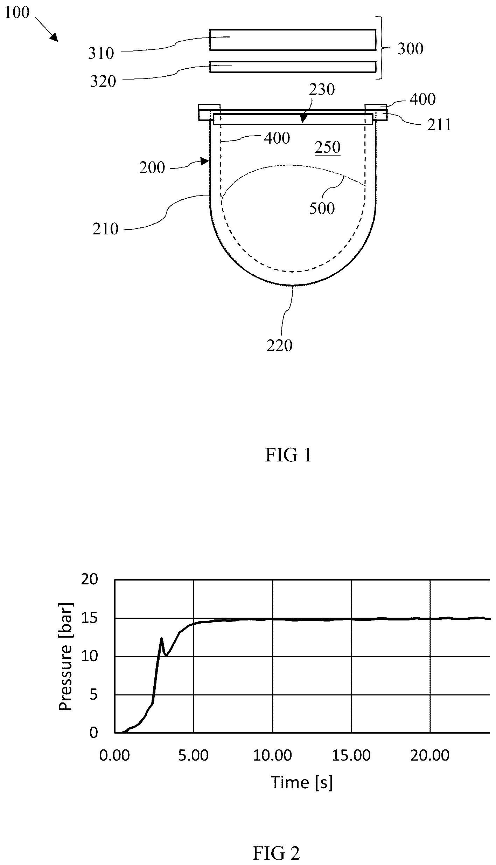

The capsule body 200 comprises a sidewall 210. The sidewall 210 delimits a chamber 250 inside the capsule 100. The sidewall 210 may be provided such that it encloses a continuous space inside the capsule body 100. This is shown exemplarily in Figure 1.

The chamber 250 is arranged to receive and store a substance 500 for the preparation of the beverage. Therein, the substance 500 may be any type of (solid, liquid, at least partially soluble and/or percolate-able) matter of a particular or definite chemical constitution. Examples for substances may be roasted ground coffee, instant coffee, tealeaves, syrup concentrate, fruit extract concentrate, a chocolate product, dehydrated edible substances, and/or combinations thereof. Accordingly, examples for beverages that may be prepared may be coffee- or chocolate-based drinks, or other similar types of food. However, the above examples for the substance 500 and beverages are not to be seen as a complete enumeration. Instead, various other examples are conceivable.

The capsule body 200 may have an opening 230 to the chamber 250. The opening 230 may be on at least one of the capsule body's 200 opposite ends. For example, the substance 500 may be filled inside the capsule 100 through the opening 230. The substance 500 may fill the chamber 250 entirely. However, there may be a free space between the opening 230 and the filling level of the substance 500, which may be filled with an inert gas for keeping the substance 500 fresh. Preferably, a rim portion 211 of the sidewall 210 may delimit the opening 230. The rim portion 211 may have the form of a flange and extend from the sidewall 210, preferably away from the chamber 250. In operation, the capsule 100 may be placed on the rim portion 211 inside a capsule holder of a beverage production machine.

The sidewall 210 may be provided such that it forms a continuous mantle surface of the capsule body 200. For example, the sidewall 210 may have an inside surface facing the chamber 250 and an outside surface facing away from the chamber 250.

A protective layer 400 for providing a preferably bidirectional barrier against moisture and/or oxygen for the substance 500 may be provided on the capsule body 200 and/or the sidewall 210. In Figure 1, the protective layer 400 is exemplarily illustrated as being provided as a liner on the inside surface of the sidewall 210, which may extend up to and over the rim portion 211. The protective layer 400 may be provided additionally or alternatively on the outside surface of the sidewall 210. Therein, the protective layer 400 may be made of a biodegradable and preferably compostable material, such as biopolymers or bioplastic families such as PHB and co-polymers, PBS, PBS-A, PLA, PBAT, Cellulose Acetate, starch, PVOH, and it may include polymers where at least one of the monomer units is vinyl alcohol, as well as compounds or laminates of any of the above mentioned materials. Preferably, the protective layer 400 may be made of a food safe material (FCS, FCMs).

For example, the capsule body 200 may be made of (laminated) (wet/dry) moulded pulp fibre. Preferably, the capsule body 200 may be made of a biodegradable and/or compostable material. The capsule body 200 may be made of a food safe material (FCS, FCMs). The capsule body 200 may comprise a layered and/or laminated structure. For example, the capsule body 200 may be relatively stiff or rigid so not to collapse during operation in a beverage production machine or during storage. The layered and/or laminated design may provide the capsule body 200 with additional rigidity and/or stiffness in comparison to other designs. Therein, the moulded pulp fibre may be a composite having an additional substrate, such as biodegradable resin, laminated on the capsule body 200. For example, a laminated structure of the capsule body 200 may be created by providing the protective layer 400 thereon. However, it is also conceivable that the capsule body 200 may comprise, for example, in addition to the protective layer 400 a further laminate layer.

The capsule 100 comprises an injection wall 220 for injecting a fluid in the chamber 250 for preparing the beverage upon interaction of the fluid with the substance 500. This is exemplarily illustrated in Figure 1.

The injection wall 220 may be provided on an opposite end of the capsule body 200 to the opening 230. The injection wall 220 may be provided integrally or separately with the capsule body 200. Hence, the capsule body 200 and the injection wall 220 may be made up of separate pieces or may be integrally formed as a one-piece. The injection wall 220 may form a tapered end portion of the capsule body 200. The injection wall 220 may be configured to be perforated by blades of the coffee production machine such that the blades provide openings for the fluid injection. Preferably, the fluid may be a liquid or a liquid/gas mixture, such as water or milk. As the capsule body 200, the injection wall 220 may comprise also the above-described protective layer 400. It is also conceivable, that the injection wall 220 may comprise (small) openings through which blades of the coffee production machine can enter and pierce the protective layer 400. Similar to the capsule body 200, the injection wall 220 may comprise a layered and/or laminated structure and may be made of (laminated) moulded pulp fibre and/or a food safe material (FCS, FCMs).

The capsule body 200 and the injection wall 220 may be provided such that the chamber 250 is closed (sealed) preferably from at least three sides as shown in Figure 1. The capsule body 200 and the injection wall 220 may be provided such that the injected fluid is dispersed evenly in the chamber 250 along the sidewall 210.

The capsule 100 comprises a delivery wall 300, which is connected to the capsule body 200 to close the chamber 250. This is exemplarily indicated in Figure 1.

For example, the delivery wall 300 may be connected to the rim portion 211. This may be accomplished, for example, by heat-sealing or adhesive bonding. Therefore, an adhesive layer or sealable coating may be provided between the delivery wall 300 and the capsule body 200, with which (adhesive layer) the capsule body 200 and the delivery wall 300 may be attached (joined) to each other. The mentioned sealable/adhesive layer may cover the full area of the retention layer 320 on the side closest to capsule body 200. The adhesive layer may form part of the delivery wall 300 or be an element separate from the capsule body 200 and the delivery wall 300. For example, the adhesive layer may form part of the protective layer 400 or may be provided in addition to it. The delivery wall 300 may be attached to the capsule body 200 via the rim portion 211. For example, the adhesive layer may extend over the opening 230 such that it covers the opening 230 and overlaps the rim portion 211. Also, the adhesive layer may cover the entire surface of the delivery wall 300, the surface which is directed towards (i.e. faces) the chamber 250. The delivery wall 300 may be provided opposite to the injection wall 220 with respect to the chamber 250. The delivery wall 300 and the injection wall 220 may be provided with respect to each other such that in operation the injected fluid traverses the capsule 100 in the order of the injection wall 220, the chamber 250 (and, if available, the substance 500 contained therein), and the delivery wall 300. The chamber 250 may be fully enclosed by the delivery wall 300 (on one end), the injection wall 220 (on an opposite end thereof) and the sidewall 210 (along/surrounding the sides between the two opposite ends). The delivery wall 300 may at least partially, preferably entirely, extend over the opening 230. Preferably, the delivery wall 300 may (at least partially) overlap (with) the rim portion 211.

The delivery wall 300 is provided in a layered manner as exemplarily shown in Figure 1. There is no limitation on the number of (different) layers the delivery wall 300 may have.

One of the layers of the delivery wall 300 is a retention layer 320. This shows exemplarily Figure 1. The retention layer 320 is adapted to be opened upon interaction with opening elements of a beverage production machine under the effect of rising pressure of the fluid being injected in the capsule 100. The retention layer 320 may be a film, membrane or ply with a defined thickness and preferably with a substantially planar surface.

The retention layer 320 is made of biodegradable material. Preferably, the retention layer 320 may be made of a material that is compostable and/or a food safe material (FCS, FCMs) also. Additionally or alternatively, the (material of the) retention layer 320 may have a defined fibre structure, such as a closed fibre structure. For example, the retention layer 320 material may be a fibre structure with at least 50% of weight corresponding to softwood pulp. Further examples for the material of the retention layer 320 may be one or any combination of the group of cellulose fibres, paper, biopolyesters, PHA, PHB and co-polymers, PBS, PBS-A, PVOH and/or polymers where at least one of the monomer units is vinyl alcohol.

The retention layer 320 may be provided such that it is resilient against a built-up pressure in the chamber 250, preferably between 1 and 20 bar, more preferred between 10 and 20 bar, most preferred between 12 and 18 bar. In particular, the material of the retention layer 320 may be configured such that it is resilient against a built-up pressure in the chamber 250 within such pressure ranges. Therein, the thickness and density of the material may influence the stiffness, i.e. the resistance to a bend, of the retention layer 320. The retention layer 320 may have a thickness of material of 10 to 150 micrometres, preferably 30 to 70 micrometres. Alternatively or additionally, the retention layer 320 may have a grammage between 20 and 150 g/m², preferably between 40 and 100 g/m². Preferably, the retention layer 320 may be attached to the (rim portion 211) capsule body 200, preferably by heat-sealing or adhesive bonding.

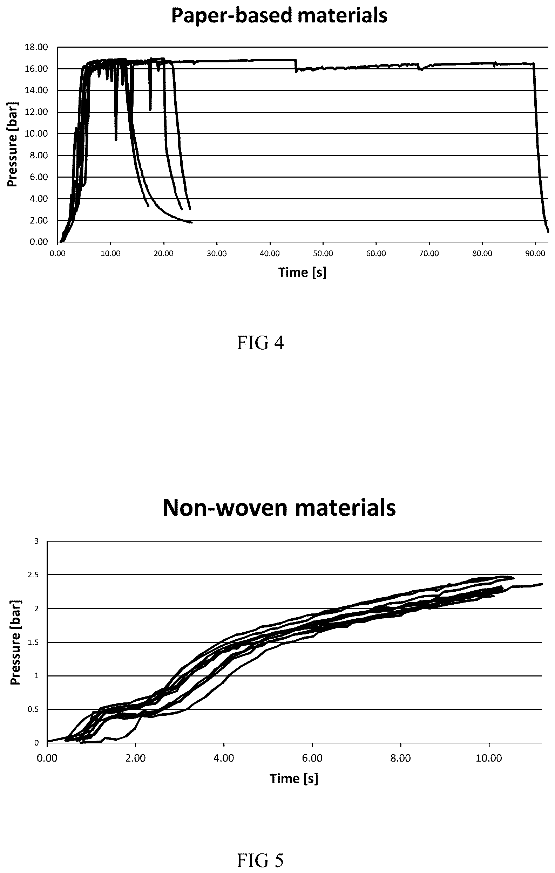

Figure 4 shows exemplary pressure curves of paper-based materials that may be suitable for being used for the retention layer 320. From Figure 4 it can be seen that a paper-based material offers at least for a time interval of around 15 seconds a resistance against pressures of up to 17 bar, thereby blocking fluids under pressure and thus, making it suitable as a layer of the delivery wall 300 for beverage preparation.

Another layer of the delivery wall 300 is a filter layer 310 as Figure 1 exemplarily shows. The filter layer 310 may be configured to filter out particles from the prepared beverage before dispensing the same via (from) the delivery wall 300. The filter layer 310 may be a film, membrane or ply of a defined thickness (and/or with a (largely) planar surface).

The filter layer 310 is made of biodegradable material. Preferably, the filter layer 310 may be made of a material that is compostable and/or a food safe material (FCS, FCMs) also. For example, the filter layer 310 may be a non-woven material, such as cellulose fibres or PLA. Further examples may be cellulose fibres, wood pulp, sugarcane pulp, rayon fibres, PBS, PBS-A, PHB and/or PLA.

The mechanical and filtering properties of the filter layer 310 may be influenced by the thickness of the material, its density as well as its permeability for particles. The filter layer 310 may have a thickness of material of 10 to 300 micrometres, preferably 30 to 250 micrometres. Additionally or alternatively, the filter layer 310 may have a grammage between 10 and 200 g/m², preferably between 20 and 150 g/m².

Figure 5 shows exemplarily pressure curves of various non-woven materials that may be used for the filter layer 320. It can be taken from Figure 5 that non-woven materials show pressure resistance of up to 2.5 bar for a time span below 10 seconds. Considering typical conditions of the beverage preparation process, this pressure resistance appears to be relatively limited and short.

However, the present invention provides a solution, by which a particular arrangement and combination of different types of materials, such as shown exemplarily in the aforementioned Figures 4 and 5, leads to advantageous effects.

Therein, the retention layer 320 and the filter layer 310 are provided on the capsule body 200 such that the filter layer 310 is provided opposite to the chamber 250 with respect to the retention layer 320.

Preferably, the retention layer 320 may face the chamber 250. Alternatively or additionally, the retention layer 320 may be provided closer to the chamber 250 than the filter layer 310. This is exemplarily illustrated in Figure 1.

Preferably, the retention layer 320 may at least partially, preferably completely, cover the opening 230. An adhesive layer may be provided between the retention layer 320 and the capsule body 200 (or the rim portion 211) that may completely cover the surface of the retention layer 320 being directed towards the container body 200. The filter layer 310 may at least partially cover the retention layer 320. Preferably, the filter layer 310 may be provided flush with the retention layer 320 in a circumferential direction (and/or preferably with the perimeter of the capsule body 200). The retention layer 320 and the filter layer 310 may be joined to each other at least partially on sides that face each other, preferably by adhesive bonding or heat-sealing. Therein, an adhesive layer may preferably be provided between the retention layer 320 and the filter layer 310 that is of a biodegradable and preferably compostable material, such as vegetable based starch or acrylic adhesive. Preferably, the retention layer 320 and the filter layer 310 may form a substantially even surface on one end of the capsule 100. For example, the retention layer 320 and the filter layer 310 may be joined to each other by e.g. heat-bonding such that the adhesive layer is provided as a stripe that covers only part of the surface of each of these two layers 310, 320. For example, the stripe may be provided along the perimeters of these two layers 310, 320. However, this is only an example and not to be considered as a complete enumeration. Instead, for example, the adhesive layer may also be provided in the centre of overlap between these two layers 310, 320.

Preferably, each of the filter layer 310 and the retention layer 320 may be made of a different biodegradable and preferably also compostable material. The different materials of the two layers may distinguish in at least one of their respective physical properties, such as tensile strength, ductility, elasticity, puncture resistance, density, porosity, and/or, if applicable, fibre structure and/or fibre orientation. For example, it may be preferred that the elasticity of the filter layer 310 may be higher than the elasticity of the retention layer 320, as, as typical for layered structures, layers being further away from the base layer undergo larger strain during bending compared to layers being closer thereto.

With such arrangements, a pressure curve as exemplarily illustrated in Figure 2 can be achieved. As becomes immediately clear from Figure 2, the corresponding pressure curve of the capsule 100 is highly advantageous for preparing a beverage.

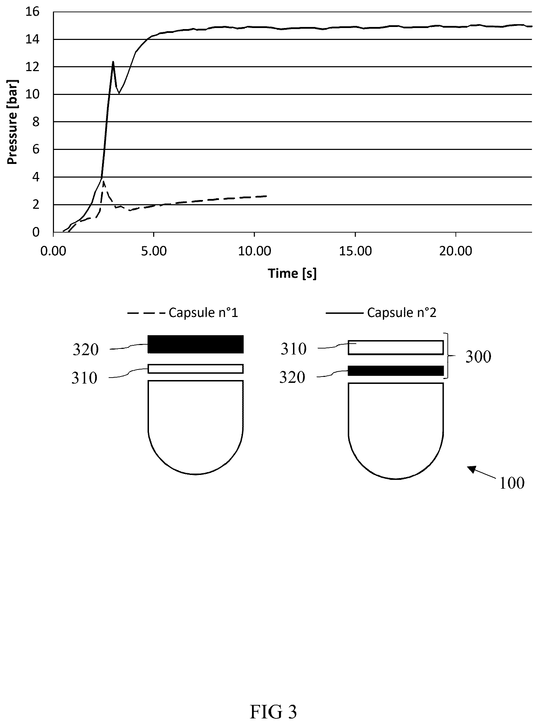

Figure 3 shows a comparison between the pressure curves of two capsules that comprise identical components and identical materials. However, capsule n°1 does not use the arrangement of the invention for forming its delivery wall while capsule n°2 has the configuration of the capsule 100 of the invention. As can be seen, the pressure resistance of the capsule 100 (capsule n°2) as well as its pressure stability during the time of extraction is significantly more stable and improved than the pressure resistance and pressure stability of the other capsule (capsule n°1) for beverage preparation applications.

Preferably, the filter layer 310 and/or the retention layer 320 may be made of a different material than the protective layer 400. To provide also the delivery wall 300 with a barrier against oxygen or moisture, it is conceivable that the retention layer 320 (and/or the material of the retention layer 320) may be configured such that it provides a bidirectional barrier against liquid and/or gaseous substances entering or leaving the chamber 250. The delivery wall 300 may comprise additional layers beside the filter layer 310 and the retention layer 320. The protective layer 400 may form part of the delivery wall 300.

A further aspect of the present invention relates to a process for manufacturing the above-described capsule 100.

Therein, the capsule body 200 is formed from a biodegradable pulp material, such as cellulose pulp, bamboo pulp, bagasse pulp or wood pulp. The injection wall 220 is formed (preferably along with the capsule body 200) such that at least a part of the chamber 250 for receiving the substance 500 for the preparation of the beverage is formed. The delivery wall 300 is provided and attached to the capsule body 200, e.g. by heat sealing. Therein, the delivery wall 300 is provided on the capsule body 200 such that the filter layer 310 is provided opposite to the chamber 250 with respect to the retention layer 320.

Preferably, the capsule body 200 may be formed by wet pulp moulding. Therein, a slurry of biodegradable pulp material, such as wood pulp, bagasse pulp, non-wood pulp, and/or cellulose based pulp in any form, may be pressed into a mould to form the capsule body 200. Thereafter, the so formed capsule body 200 is dried. At least a part of the inside surface (prior to filling) or at least a part of the outside surface of the capsule body 200 may be provided with the protective layer 400, e.g. by thermoforming.

Alternatively, the capsule body 200 may be formed by dry pulp moulding. Therefore, a blank of preferably dried cellulose fibres may be provided, from which the capsule body 200 is formed with a tool preferably under the application of heat and/or water. The protective layer 400 may be applied as a liner on the inside of the capsule body 200 (for example by applying heat and/or a vacuum), which may extend on and cover the inwards facing surface of the sidewall 210 between both ends of the capsule body 200 and may extend and cover the rim portion 211 on its surface facing away from the chamber 250.

In both of the two aforementioned processes, the injection wall 220 may be formed along with the capsule body 200, e.g. in the same step. Preferably, the injection wall 220 may be formed either by (wet/dry) pulp moulding or by attachment, e.g. with a biodegradable adhesive, of a membrane or film as the injection wall 220 to the capsule body 200 after forming of the capsule body 200. For example, by (wet/dry) pulp moulding the injection wall 220 may be formed together with the capsule body 200 in the same process step while a second, separate process step may be needed for attaching the injection wall 220 with an adhesive. The capsule body 200 may be filled with the substance 500 for the preparation of the beverage. The delivery wall 300 may be provided and attached to the capsule body 200 such that the retention layer 320 may face (be directed towards) the chamber 250. The protective layer 400 may be added to a (circumferential) surface of the capsule 100, which is preferably made from a biodegradable and/or compostable material. At least a part of an inner facing or of an outer facing surface of the injection wall 220 (a surface which in addition may delimit the chamber 250) may be provided with the protective layer 400.

A further aspect of the invention relates to a use of the above-described capsule 100 for preparing a beverage in a beverage production machine having a capsule holder. For example, the capsule 100 as described above may be provided and inserted in a beverage production machine. Preferably, the capsule 100 is placed such in the beverage production machine that the filter layer 310 is closer to (and eventually contacts) the opening elements of the machine than the retention layer 320. The injection wall 220 of the capsule 100 may be perforated by an injection nozzle of the beverage production machine to inject a fluid in the chamber 250. The fluid, such as a liquid or a liquid/gas mixture, may be injected into the chamber 250, thereby causing a pressure to build up in the capsule 100 and the delivery wall 300 is to thrust against opening elements, e.g. of the beverage production machine. At least part of the delivery wall 300 may be perforated by the opening elements when the pressure of the injected fluid reaches a predetermined level in the chamber 250. Preferably, the retention layer 320 may be perforated. Alternatively or additionally, the delivery wall 300 may be provided such (e.g. with regards to its material configuration/selection) that the retention layer 320 may be perforated while the filter layer 310 is not perforated. The prepared beverage may be drained from the capsule 100, wherein the beverage may pass through openings in the retention layer 320 and (cavities in the porous material of) the filter layer 310, wherein the retention layer 320 may be closer to the chamber 250 than the filter layer 310 and the filter layer 310 is provided opposite to the chamber 250 with respect to the retention layer 320.

The invention is not limited by the embodiments as described hereinabove, as long as being covered by the appended claims. All the features of the embodiments described hereinabove can be combined in any possible way and be provided interchangeably. For example, the above-described order of the steps of the manufacturing process for the capsule 100 may be changed arbitrarily.

## Claims

1. A capsule (100) for preparing a beverage in a beverage production machine, wherein the capsule (100) comprises:
- a capsule body (200) with a sidewall (210) delimiting a chamber (250) for containing a substance (500) for the preparation of the beverage, and a rim portion (211);
- an injection wall (220) for injecting a fluid in the chamber (250) for preparing the beverage upon interaction of the fluid with the substance (500); and
- a delivery wall (300) being connected to the capsule body (200) to close the chamber (250),
wherein the delivery wall (300) comprises in a layered manner:
∘ a retention layer (320) being adapted to be opened upon interaction with opening elements under the effect of rising pressure of the fluid being injected into the capsule (100),
∘ a filter layer (310) for filtering out particles from the prepared beverage dispensed via the delivery wall (300), the filter layer (310) is provided opposite to the chamber (250) with respect to the retention layer (320),
∘ a moisture and/or oxygen barrier layer having a barrier function against liquid and/or gaseous substances entering and/or leaving the chamber (250), and
∘ a first adhesive layer covering, at least partially, the delivery wall (300), preferably the retention layer (320) on the side of the delivery wall (300), preferably the retention layer (320) that is oriented towards the chamber (250) for joining the delivery wall (300) to the capsule body (200), preferably to the rim portion (211); and
wherein each of the filter layer (310), the retention layer (320), the barrier layer and the first adhesive layer is made of biodegradable material.

2. The capsule (100) according to claim 1, wherein the delivery wall comprises a second adhesive layer provided between the retention layer (320) and the filter layer (310) and at least partially joining the retention layer (320) and the filter layer (310) to each other on opposite sides thereof.

3. The capsule (100) according to claim 1 or 2, wherein each of the filter layer (310) and the retention layer (320) are made of different materials distinguishing in at least one of their respective physical properties, such as tensile strength, ductility, elasticity, puncture resistance, density, porosity, and/or, if applicable, fibre structure and/or fibre orientation.

4. The capsule (100) according to any one of the preceding claims, wherein the retention layer (320), preferably the material of the retention layer (320), is configured such that it is resilient against a built-up pressure in the chamber (250) between 1 and 20 bar, more preferred between 10 and 20 bar, most preferred between 12 and 18 bar.

5. The capsule (100) according to any one of the preceding claims, wherein the retention layer (320) is made of a material that is compostable and/or has a defined, preferably closed fibre structure, such as fibre structures with at least 50% of weight corresponding to softwood pulp, cellulose fibres, paper or Polyhydroxyalkanoate (PHA), Polyhydroxybutyrate (PHB) and co-polymers, Polybutylenesuccinate (PBS/PBS-A), biopolyesters, Cellulose Acetate, starch, polyvinyl alcohol (PVOH), polymers where at least one of the monomer units is vinyl alcohol, compounds and/or laminates of the above mentioned materials, and/or
wherein the retention layer (320) has a grammage between 20 and 150 g/m², preferably between 30 and 100 g/m².

6. The capsule (100) according to any one of the preceding claims, wherein the filter layer (310) is made of a compostable and/or non-woven material, such as wood or sugarcane pulp, cellulose fibres, rayon fibres, polybutylene succinate (PBS), poly(butylene succinate-co-butylene adipate) (PBS-A/PBSa), polyhydroxybutyrate (PHB) and/or Polylactic acid (PLA), and/or
wherein the filter layer (310) has a grammage between 10 and 150 g/m², preferably between 20 and 100 g/m².

7. The capsule (100) according to any one of the preceding claims, wherein the capsule body (200), preferably the sidewall (210), more preferred the rim portion (211), and/or the injection wall (220) comprises a protective layer (400) for providing a preferably bidirectional barrier against moisture and/or oxygen and/or for providing a sealing interface between the capsule body (200) and the injection wall (220), wherein the protective layer (400) is made of a biodegradable and preferably compostable material, such as biopolymers or polyvinyl alcohol (PVOH), polymers where at least one of the monomer units is vinyl alcohol, and compounds or laminates of the above mentioned materials, and wherein preferably the protective layer (400) is made of a different material than the filter layer (310) and/or the retention layer (320).

8. The capsule (100) according to any one of the preceding claims, wherein the capsule body (200) and/or the injection wall (220) comprise a layered and/or laminated structure, and wherein preferably the capsule body (200) and/or the injection wall (220) are made of preferably laminated moulded pulp fibre, and/or wherein the capsule body (200) and the injection wall (220) are made up of separate pieces or are integrally formed, e.g., as a one-piece.

9. Use of a capsule (100) according to any one of the preceding claims 1 to 8 for preparing a beverage in a beverage production machine; the beverage production machine comprising
• a capsule holder,
• an injection nozzle for injecting a fluid in the chamber (250) of the capsule (100), and
• opening means,
in which the capsule (100) is inserted in the beverage production machine and placed such that the filter layer (310) of the delivery is closer to the opening elements than the retention layer (320),
in which the injection wall (220) of the capsule (100) is perforated by the injection nozzle and fluid is injected in the chamber (250), the fluid causing a pressure build up in the capsule (100) and the delivery wall (300) to thrust against opening means of the beverage, and
in which the prepared beverage is drained from the capsule (100) by passing through openings in the retention layer (320) and cavities in the porous material of the filter layer (310).

10. Use of a capsule (100) according to claims 9 in which during extraction of the capsule, the retention layer (320) is perforated while the filter layer (310) is not perforated
